Europäisches Patentamt

European Patent Office

Office européen des brevets

(11) Publication number: **0 042 197**
A1

# EUROPEAN PATENT APPLICATION

(21) Application number: **81200661.7**

(22) Date of filing: **11.06.81**

(51) Int. Cl.³: **G 02 B 7/26**

(30) Priority: **12.06.80 US 158993**

(43) Date of publication of application: **23.12.81**
**Bulletin 81/51**

(84) Designated Contracting States: **AT BE CH DE FR GB IT LI LU NL SE**

(71) Applicant: **E.I. DU PONT DE NEMOURS AND COMPANY, Legal Department 1007 Market Street, Wilmington, Delaware 19898 (US)**

(72) Inventor: **Townsend, Peter Keith, 416 Black Latch Lane, Camp Hill Pennsylvania 17011 (US)**

(74) Representative: **van der Beek, George Frans et al, Nederlandsch Octrooibureau Johan de Wittlaan 15 P.O. Box 29720, NL-2502 LS Den Haag (NL)**

(54) **Fiber optic connector.**

(57) A fiber optic connector containing opposed aligned terminals (12) and a stripped optic fiber (30) permanently centered within each terminal (12) of the connector by multiple crimps (56) applied to the exterior surface (40) around the circumference of the terminal (12).

## Title
## FIBER OPTIC CONNECTOR
### Description
### Technical Field

This invention relates to a fiber optic connector. More specifically, it refers to a fiber optic connector having a stripped optic fiber permanently centered within a terminal of the connector by a crimp.

### Background of the Invention

Accurate alignment of the opposed ends of two connecting optic fibers is critical since misalignment severly reduces transmission across the connection point. Significant research and development money has, therefore, been expended to create a more perfect alignment.

There are many methods for aligning optical fibers in current use. Unfortunately, many of these are bulky, expensive, or not sufficiently accurate to prevent at least some reduction of transmission in the connection area.

In the prior art, U.S. Patent 4,176,909, describes a process for welding bundles of fibers to a plastic tip of a connector by ultra sound. U.S. Patent 4,193,665, describes a lateral alignment of fiber optic cable by crimping a tubular alignment sleeve around the fiber terminal. U.S. 3,972,585, describes a connector with deformed walls as in the shape of a triangle. In this latter device, crimping is employed for axial connection and not for alignment of fibers.

### Summary of the Invention

According to the present invention, there is provided a fiber optic connector adapted to centrally and permanently locate an optic fiber in a terminal using a simple one-step crimping operation. The fiber optic connector of this invention employs a plastic terminal enclosing the stripped end of an optic fiber. The fiber is permanently centered in the terminal by heat crimping or mechanically crimping the walls of the plastic terminal. Thereafter the terminal is aligned with an identical terminal containing an opposing optic fiber in an interconnecting bore. Additionally, the terminals have a pair of slots at their tip, which allow for movement and adaptation to different diameter optic fibers as described in U.S. Patent application Serial No. 050,426, filed June 20, 1979.

### Description of the Drawings

Worthwhile objectives and advantages of the connector will be apparent from the following specification wherein reference is made to the accompanying drawings in which :

Figure 1 is a plan view of the assembled connector.

Figure 2 is a plan view of the terminals located on a carrier strip.

Figure 3 is a plan view of the terminal protective end cap.

Figure 4 is a fragmentary cut-away of the connector assembly including terminals and their interconnecting bore.

Figure 5 is a sectional view of the entire connector assembly.

Figure 6 is a sectional view along lines 6-6 of Figure 5.

Figure 7 is a sectional view along lines 7-7 of Figure 5.

Figure 7a is a sectional view similar to Figure 7 except the result of four crimp prongs are shown instead of three.

Figure 8 is a plan view of an alternate embodiment of the connector showing more than one terminal inserted from each side into an interconnecting bore.

Figure 9 is a sectional view of Figure 8 showing the positive locking latch of the dual terminal housing.

Figure 10 is a sectional view of a typical hand crimping device that can be used to make three crimps as shown in Figure 7.

### Description of the Preferred Embodiment

The fiber optic connector chosen for purposes of illustration includes a body 10 having opposed pairs of terminals 12 and an interconnecting bore 14. The terminals are fastened to the interconnecting bore by C-rings 16. Each C-ring fits into a slot 18 of the terminal. A strain relief is provided by crimping the metal end 20 of the terminal 12 to the insulated fiber optic cable 22.

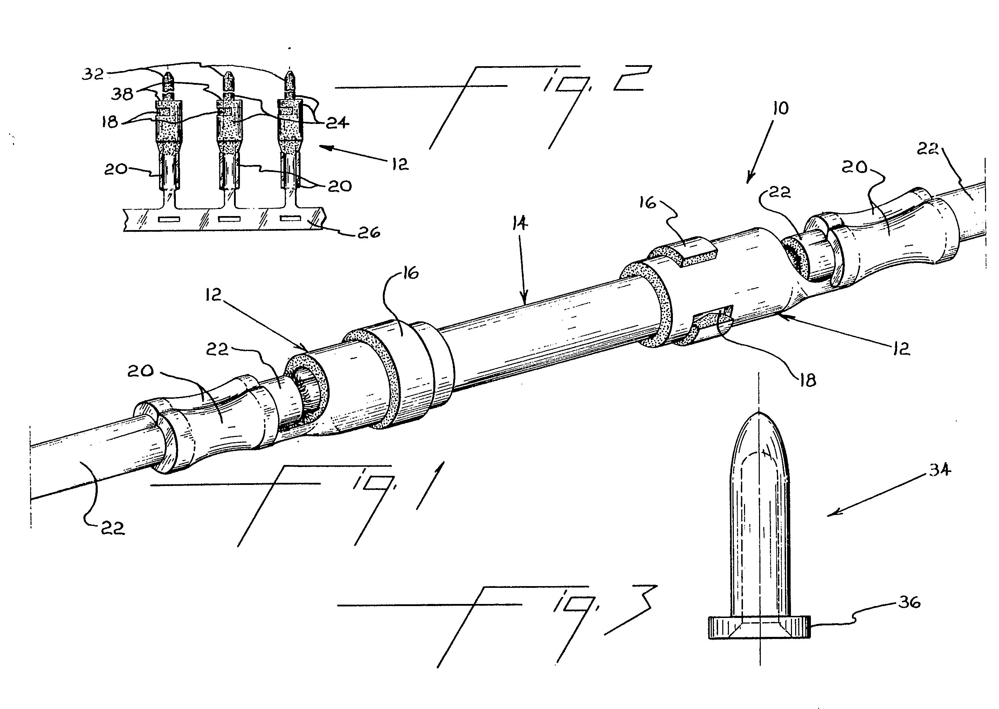

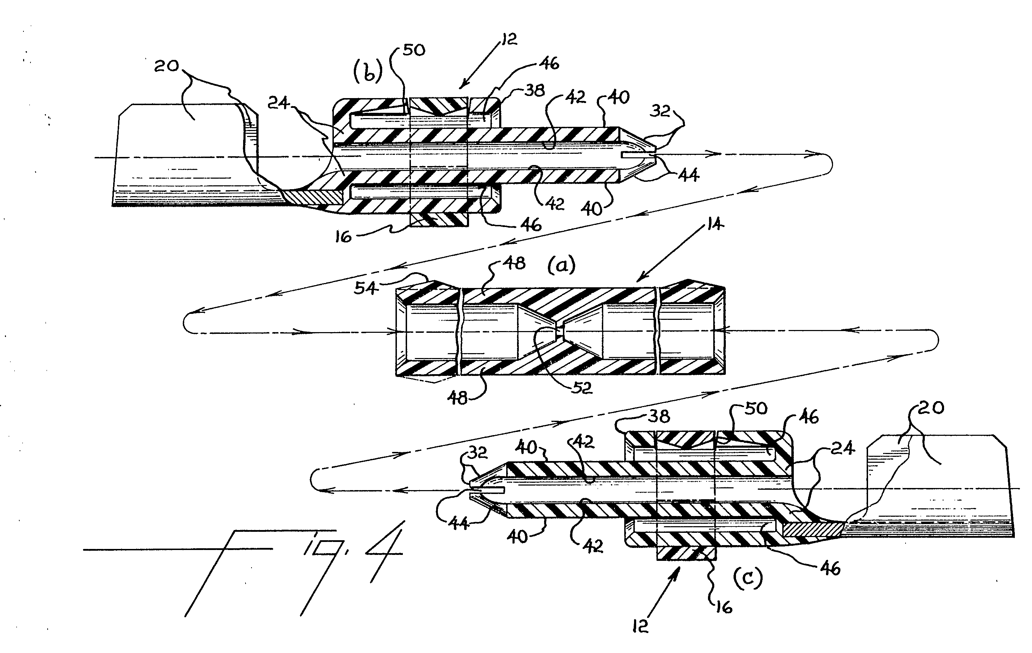

The terminal 12 is prepared by insert molding plastic 24 onto metal crimp arms 20 as shown in Figure 2. The carrier strip 26 supports the terminals 12 until ready for use. Optionally, the metal portion 20 of the terminal 12 can be coated with a plastic such as polyethylene or polypropylene.

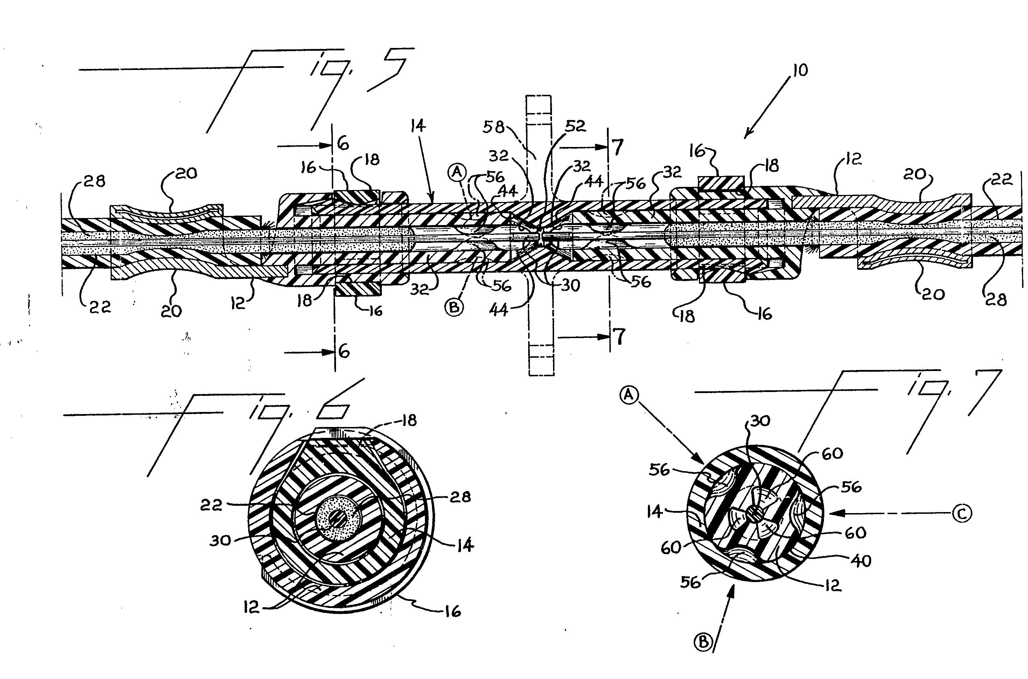

The insulation layer 28 is partially stripped away before inserting the fiber 30 into the terminal. The fiber core covered only by its cladding is allowed to exit from the tip 32 of the terminal 12 and is cut off close to tip 32. Until ready for inserting into the interconnecting bore 14, a protective end cap 34 as shown in Fig. 3 is placed over the terminal 12. The end cap 34 has a stop 36 which rests on a shelf 38 of the terminal 12.

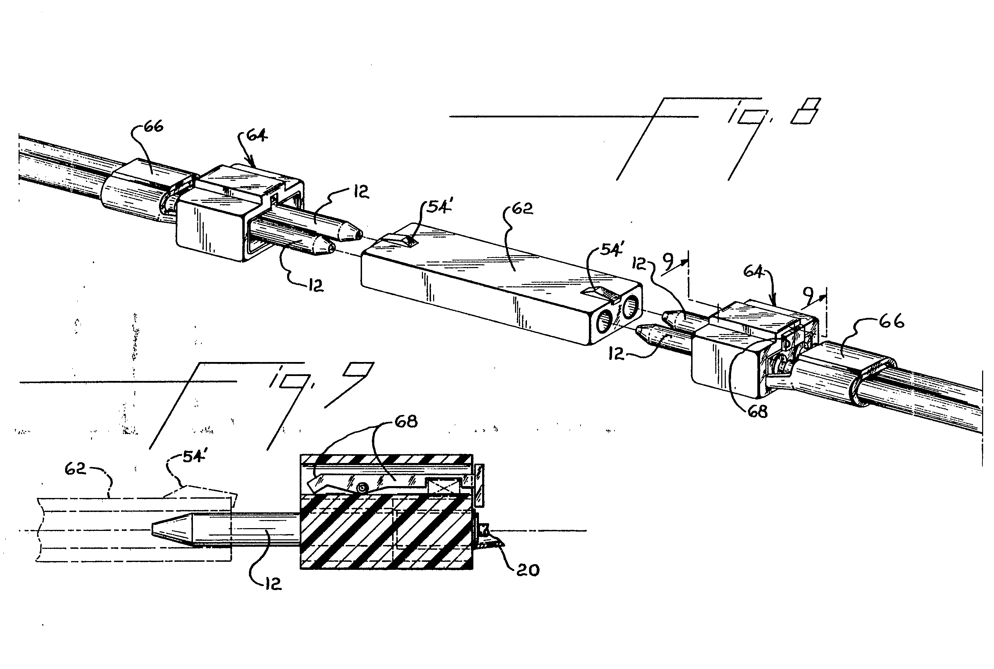

Identical terminals 12 are shown in a cut-away longitudinal section at the top and bottom (b) and (c) of Fig. 4. This view shows the metal part 20 which is used to crimp the insulated fiber optic cable in a conventional manner to provide a strain relief. The insert molded plastic portion 24 of the terminal 12 has a tip 32 which consists of an exterior surface 40 and an interior surface 42. The tip 32 has two slots 44 which grip the fiber 30. The stripped optic fiber 30 which may be either glass or plastic, is inserted between the two interior surfaces 42 of the terminal 12 and exits slightly from the slots 44 in the tip 32.

The terminal 12 has two slots 46 for receiving side walls 48 of interconnecting bore 14. Additionally the terminal 12 has a slot 18 which receives a C-ring 16 for permanent attachment to the interconnecting bore 14. It also has an anti-rotational slot 50 for receiving the ramp 54 from the interconnecting bore 14.

The interconnecting bore 14 has a small light oriface 52 in its middle where the optic fibers 30 oppose each other. Although the two opposing optic fibers meet in the light oriface 52, they do not touch under normal circumstances. The ramp 54 locks into an anti-rotation slot 50 of the terminal 12 as the terminal is shoved over the interconnecting bore 14. The C-ring 16 locks each terminal to the interconnecting bore 14. The ramp 54 can be on either side of the interconnecting bore 14 depending on the location of the slot 50 on the terminal 12.

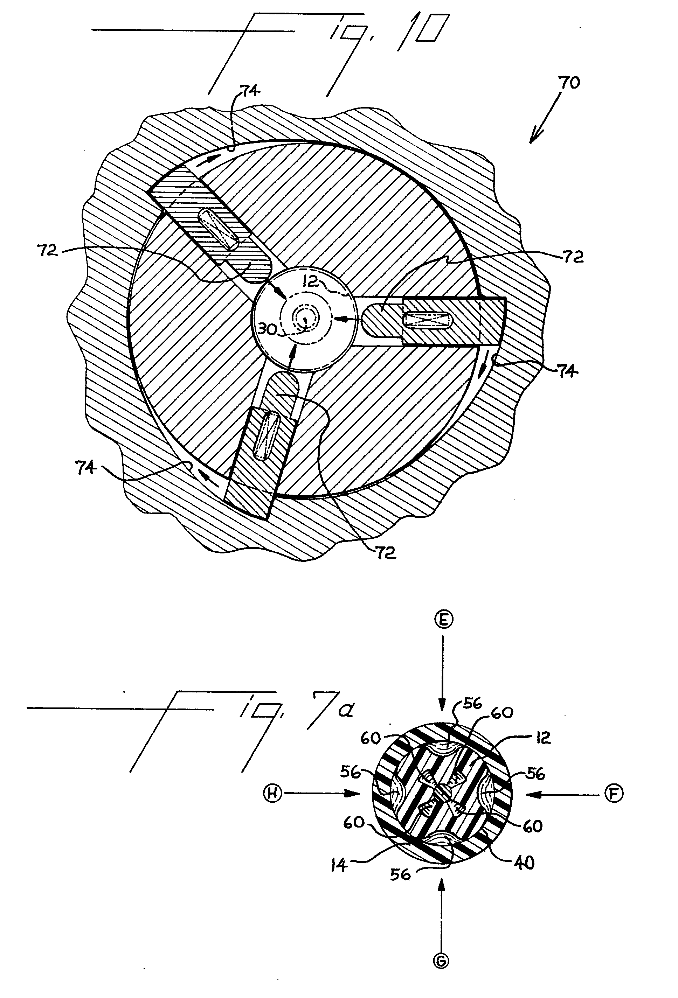

Figure 5 shows the two terminals 12 opposing each other in the interconnecting bore 14. The crimp 56 in the terminal tip 32 is formed by three prongs equally spaced apart (120°). These prongs are pressed into the plastic exterior surface 40 of the terminal tip 32 by a tool in order to permanently crimp the plastic 24 to the stripped optic fiber and simultaneously center it within the terminal 12. More than three prongs can be used to crimp the optic fiber. However, the crimp prongs must be equally spaced or continous in order to insure centering of the fiber in the terminal 12.

It is preferred that the plastic terminal tip 32 be heated to its softening point to facilitate crimping. It is also possible to cold crimp using a mechanical method. A bulkhead mount 58 can be used to hold the connector in place.

Figure 6 shows the fiber core 30 with its insulation 28 inserted into one end of a terminal 12. The stripped fiber is shown in Fig. 7 with a sectional view through the crimp zone 56. Voids 60 are created by the crimping action. Three prongs are preferred for use in centering the fiber 30. Fig. 7a shows a crimp made by using four instead of three crimping prongs.

As an alternate embodiment, pairs of terminals 12 can be inserted into a dual channel interconnecting bore 62 shown in Fig. 8 to provide multiple connections.

In the embodiment of the invention shown in Fig. 8 a single locking ramp 54' is latched by a positive locking latch 68 located within the dual terminal housing 64. A metal strain relief clamp 66 is used around the outer insulation covering the two fiber optic cores. As in the connector of Fig. 5, the ends of the optic fiber is stripped from its insulation prior to insertion into the dual terminal housing 64.

The latch 68 shown in Fig. 9 should be made out of metal or high strength plastic.

The optic fiber is crimped by exerting a heat crimping device or mechanical crimping to the tip 32 of the terminal 12 before inserting the terminal into the dual channel interconnecting bore 62.

A typical crimping tool is shown in Fig. 10. Three prongs 72 actuated by a circular mechanical motion moving the prongs over a cam 74 forces pressure on the plastic of the terminal and causes it to collapse onto the optic fiber 30. This step centers the fiber and permanently affixes the fiber within the terminal 12.

Plastic used for the terminals of this invention are polyethylene, polypropylene or polyvinylchlonicle with flame retardant, fiber fill.

Optic fibers used in this invention are gradient index glass, step index glass, plastic clad silica or step index plastic.

These fibers have a diameter between 0,1016 mm to 1,016 mm. The split end (slots 44) of the terminal tip 32 allows for variation in the diameter of the fiber.

Under normal circumstances the temperature required for heat crimping the plastic is about 120°C.

## CLAIMS

1. In a connector for optical fibers having opposed aligned elongated identical plastic terminals (12) with interior (42) and exterior (40) surfaces, each terminal enclosing at least one stripped optical fiber (30) and meeting within an interconnecting bore (14,62), the improvement wherein said fiber (30) is permanently centered within the interior surfach (42) of said terminal (12) by multiple crimps (56) equally spaced and directly applied to the exterior surface (40) around the circumference of said terminal (12).

2. The connector according to claim 1 wherein the crimps (56) are achieved by heating the plastic (24) to about its softening point and pressing at least three equally spaced prongs into the exterior surface (40) of said terminal (12).

3. The connector according to claim 2 wherein three prongs spaced 120° apart are pressed into the exterior surface 40) of said terminal (12).

4. The connector according to claim 2 wherein four prongs spaced 90° apart are pressed into the exterior surface (40) of said terminal (12).

5. The connector according to claim 1 wherein the crimps are achieved by mechanically pressing at least three equally spaced prongs (72) into the exterior surface (40) of said terminal (12).

6. The connector according to claim 5 wherein three prongs (72) spaced 120° apart are pressed into the exterior surface (40) of said terminal (12).

7. The connector according to claim 5 wherein four prongs spaced 90° apart are pressed into the exterior surface (40) of said terminal (12).

8. The connector according to claim 1 wherein each terminal (12) is affixed to the interconnecting bore (14) with a C-ring (16).

9. The connector according to claim 8 wherein each terminal (12) contains an anti-rotational slot (50) for receiving a ramp (54) from said interconnecting bore (14).

10. The connector according to claim 1 wherein two pair of terminals (12) meet within said interconnecting bore (62).

Fig. 1

Fig. 2

Fig. 3

Fig. 4

Fig. 5

Fig. 6

Fig. 7

Fig. 8

Fig. 9

0042197

Fig. 10

Fig. 7a

## EUROPEAN SEARCH REPORT

| | DOCUMENTS CONSIDERED TO BE RELEVANT | | CLASSIFICATION OF THE APPLICATION (Int. Cl.³) |
|---|---|---|---|
| Category | Citation of document with indication, where appropriate, of relevant passages | Relevant to claim | |
| | <u>EP - A - 0 011 561</u> (RADIALL)<br><br>* Pages 6,7 and figures 1-8 *<br><br>-- | 1,4,5,<br>7,10 | G 02 B 7/26 |
| | IBM TECHNICAL DISCLOSURE BULLETIN,<br>vol. 22, no. 10, March 1980,<br>New York, USA<br>L.A. PRICE II et al. "Fiber-optic<br>male connector", page 4475.<br><br>* Whole document *<br><br>-- | 1 | |
| | OPTICAL COMMUNICATION CONFERENCE,<br>17-19 September 1979,<br>Amsterdam, NL<br>G.D. KHŒ et al. "Demountable<br>optical fibre connectors specially<br>suited for realization using<br>injection-moulded thermoplastics",<br>pages 9.2-1 to 9.2-4<br><br>* Page 9.2-1 and figures 1-4 *<br><br>-- | 1,3,5,<br>6,9,10 | TECHNICAL FIELDS SEARCHED (Int. Cl.³)<br><br>G 02 B 7/26 |
| | <u>DE - A - 2 602 661</u> (FELTEN &<br>GUILLEAUME CARLSWERK)<br><br>* Figure 2 *<br><br>& NL - A - 76 13678<br><br>------ | 1,8 | |

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons
&: member of the same patent family, corresponding document

The present search report has been drawn up for all claims

| Place of search | Date of completion of the search | Examiner |
|---|---|---|
| The Hague | 13-08-1981 | MALIC |

EPO Form 1503.1 06.78